Europäisches Patentamt

European Patent Office

Office européen des brevets

(11) Veröffentlichungsnummer: **0 352 558 B1**

## (12) EUROPÄISCHE PATENTSCHRIFT

(45) Veröffentlichungstag der Patentschrift: **16.02.94**

(21) Anmeldenummer: **89112837.3**

(22) Anmeldetag: **13.07.89**

Die Akte enthält technische Angaben, die nach dem Eingang der Anmeldung eingereicht wurden und die nicht in dieser Patentschrift enthalten sind.

(51) Int. Cl.⁵: **C08L 97/02**

(54) Verfahren zur Herstellung von Presswerkstoffen.

(30) Priorität: **26.07.88 DE 3825320**

(43) Veröffentlichungstag der Anmeldung:
**31.01.90 Patentblatt 90/05**

(45) Bekanntmachung des Hinweises auf die Patenterteilung:
**16.02.94 Patentblatt 94/07**

(84) Benannte Vertragsstaaten:
**AT BE CH DE ES FR GB IT LI SE**

(56) Entgegenhaltungen:
**EP-A- 0 285 431**
**DE-A- 2 538 999**
**GB-A- 2 104 062**
**US-A- 4 359 507**

(73) Patentinhaber: **BAYER AG**

**D-51368 Leverkusen(DE)**

(72) Erfinder: **König, Eberhard, Dr.**
**Arthur-Hantzsch Strasse 50**
**D-5000 Köln 80(DE)**
Erfinder: **Sachs, Hanns Immo**
**Semmelweisstrasse 149**
**D-5000 Köln 80(DE)**
Erfinder: **Kasperek, Peter**
**Sommerhausen 57**
**D-5203 Much(DE)**
Erfinder: **Larimer, Donald Richard**
**Ferdinandstrasse 26**
**D-5060 Bergisch-Gladbach 2(DE)**

**Beschreibung**

Die Erfindung betrifft ein Verfahren zur Herstellung von Preßwerkstoffen unter Verwendung von Polyisocyanat-Bindemitteln oder Mischungen aus Polyisocyanaten und anderen Bindemitteln und gleichzeitiger Mitverwendung von Zusätzen, bestehend aus Polyether- bzw. Polyesterpolyolen sowie beliebigen Mischungen derselben und Alkylencarbonaten.

Preßwerkstoffe wie z.B. Spanplatten, Verbundplatten oder andere Formkörper werden gewöhnlich so hergestellt, daß man das anorganische oder organische Rohmaterial, z.B. eine Masse aus Holzschnitzeln, Holzfasern oder anderem Lignocellulose enthaltenden Material, mit verschiedenen Leimen bzw. Bindemitteln heiß verpreßt. In der Holzwerkstoff-Industrie, dem größten Bereich der Preßwerkstoffe, setzt man als nach wie vor wichtigste Bindemittel z.B. wäßrige Dispersionen oder Lösungen von Harnstoff/Formaldehyd (Aminoplaste)- oder Phenol/Formaldehyd (Phenoplaste)-Harze ein. Es ist auch bekannt, als Bindemittel für Preßplatten anstelle von Formaldehydharzen Polyisocyanate bzw. Polyisocyanatlösungen zu verwenden (DE-OS 1 271 984; DE-OS 1 492 507; DE-OS 1 653 177; DE-OS 2 109 686).

Die Verwendung von Polyisocyanaten als Bindemittel, seit 1973 industriell in steigendem Maße, verbessert die Stabilität und das Feuchteverhalten der Produkte und erhöht deren mechanische Festigkeiten. Darüber hinaus besitzen Polyisocyanate als Bindemittel, wie es die DE-OS 2 109 686 offenbart, weitreichende verfahrenstechnische Vorteile.

Die großindustrielle Herstellung von mit Polyisocyanaten gebundenen Materialien, insbesondere lignocellulosehaltigen Werkstoffen, wie z.B. Holzspanplatten, wird jedoch durch die, im Gegensatz zu den Aminoplastharzen, nicht vorhandene Eigenklebrigkeit oder Kaltklebefähigkeiten der beleimten Späne behindert. Auch durch eine Kaltvordichtung (Kaltverpressung) der mit Polyisocyanaten beleimten, aber noch feuchten Werkstoffteile, können keine ausreichend stabilen bzw. selbsttragenden Formlinge erzielt werden, wie sie für manche Produktionsanlagen erforderlich sind. Hierdurch ist eine universelle Anwendung von Polyisocyanaten bei der Preßwerkstoffherstellung sehr erschwert.

Die auf Bänder, Preßbleche u.ä. gestreuten Späneformlinge werden auf dem Transport zur Heißpresse auf weitere Bänder, Bleche, Rollen u.ä. übergeben, abgeschoben bzw. diese Unterlagen werden herausgezogen. Damit dies ohne Zerstörung der Späneformlinge bzw. ohne Störungen der Randzonen möglich wird, werden die Späneformlinge kalt vorverdichtet. Bei vorverdichteten Formlingen sollen zusätzlich deren Oberflächenspäne so miteinander verbunden sein, daß die zwischen den Späneformlingen und den sich schließenden Heißpreßplatten austretende Luft keine Späne mitreißt (d.h. daß kein "Verblasen" der Oberflächen stattfindet). Es existieren kontinuierlich und taktweise arbeitende Vorpressen, welche die Späne 10 bis 60 Sekunden lang mit spezifischen Drücken bis zu 40 bar belasten.

Der Erfindung liegt nun die Aufgabe zugrunde ein Verfahren zu entwickeln, welches den Nachteil der nicht vorhandenen Kaltklebefähigkeit von mit Polyisocyanat-Bindemitteln beleimten Spänen aufhebt, gleichzeitig aber die günstige Rieselfähigkeit der beleimten Späne, die für die einwandfreie Streuung der Formlinge notwendig ist, beibehält.

Diese Aufgabe wird in für den Fachmann überraschend einfacher Weise mittels des erfindungsgemäßen Verfahrens gelöst.

Gegenstand der Erfindung ist ein Verfahren zur Herstellung von Preßwerkstoffen durch Verpressen von Substraten mit Bindemitteln auf Basis von Polyisocyanaten, dadurch gekennzeichnet, daß das Bindemittel als Komponenten Polyisocyanate, Verbindungen mit mindestens zwei gegenüber Isocyanaten reaktionsfähigen Wasserstoffatomen vom Molekulargewicht 400 bis 10 000, Alkylencarbonate und gegebenenfalls weitere Zusatzmittel enthält, wobei auf 100 Gew.-Teile des Polyisocyanats 10-250 Gew.-Teile, vorzugsweise 20-80 Gew.-Teile, der Verbindungen mit mindestens zwei gegenüber Isocyanaten reaktionsfähigen Wasserstoffatomen vom Molekulargewicht 400-10 000 eingesetzt werden, und das Verhältnis dieser Verbindungen zum Alkylencarbonat im Bereich von 0,5:1,0 bis 10,0:1,0 Gew.-Teile liegt.

Erfindungsgemäß bevorzugte Ausführungsformen bestehen darin, daß

- das Alkylencarbonat Propylencarbonat darstellt
- die Verbindungen mit mindestens zwei gegenüber Isocyanaten reaktionsfähigen Wasserstoffatomen vom Molekulargewicht 400 - 10 000 Hydroxylgruppen aufweisende Polyether oder Polyester darstellen
- das Bindemittel aromatische Polyisocyanate enthält
- die aromatischen Polyisocyanate Gemische aus Diphenylmethan-diisocyanaten und Polyphenyl-polymethylen-polyisocyanaten, wie sie durch Anilin-Formaldehyd-Kondensation und anschließende Phosgenierung erhalten werden, darstellen

sowie

- das Bindemittel als weitere Zusatzmittel wäßrige Kondensationprodukte aus Harnstoff, Melamin, Phenol und Tannin oder beliebige Mischungen derselben mit Formaldehyd und Sulfitablaugen enthält.

Erfindungsgemäß wird eine Kaltklebefähigkeit der mit obigen Bindemitteln beleimten Späne aus z.B. lignocellulosehaltigen Rohstoffen erzielt.

Somit wird es möglich, die Vorteile, die die Polyisocyanate als Bindemittel für Preßwerkstoffe bieten, auch auf solchen Produktionslinien auszunutzen, auf denen eine Kaltklebefähigkeit der Späneformlinge unumgänglich ist. Von besonderem wirtschaftlichen Nutzen ist die Möglichkeit der Verkürzung der Preßzeit in der Heißpresse bei Einsatz des erfindungsgemäßen Verfahrens. Die Kaltklebefähigkeit der mit den erfindungsgemäßen Bindemitteln beleimten Späne bietet weitere Vorteile. Störungen im Randbereich der gestreuten Späneformlinge werden reduziert bzw. vermieden; durch die geringeren Besäumverluste wird die wirtschaftliche Ausnutzung der Rohplatten erhöht. Dies ist auch von Interesse für Anlagen die nicht zwingend kaltklebrige Späneformlinge erfordern.

Sowohl die Kombination von Polyolen mit Polyisocyanaten als Bindemittel (DE-OS 2 538 999, DE-OS 2 403 656) als auch Zusätze von Alkylencarbonat, z.B. Propylencarbonat, zum Polyisocyanat (US 4 359 507, Elastomers Plast: 16 (1984) Nr. 3) sind hinreichend beschrieben.

Für einen wirtschaftlich sinnvollen Einsatz derartiger Bindemittel ist es jedoch notwendig, daß die Flüssigkeiten optimal fein verdüst auf die Späne aufgebracht werden. Im Falle der z.T. hochviskosen Polyole erfolgt dies durch kolloidale Lösung der Polyolkomponente in einem flüssigen Medium, z.B. Wasser (DE-OS 2 538 999).

Alkylencarbonate, dank ihrer niedrigen Viskosität (z.B. Propylencarbonat), können wiederum in vorliegender Form eingesetzt bzw. auch dem Polyisocyanat zugesetzt werden.

Das Verhalten der so beleimten Späne unterscheidet sich jedoch in keinster Weise vom Verhalten nur mit reinen Polyisocyanat-Bindemitteln beleimten Spänen. Darüber hinaus führt der Zusatz von Hydroxylgruppenhaltigen Verbindungen mehr oder minder rasch zu den ensprechenden Polyurethanen. eine sinnvolle Anwendung unter den z.B. in der Holzwerkstoffindustrie üblichen Bedingungen (Lagerung des beleimten Rohmaterials bis zu 60 min bei z.T. höheren Temperaturen) ist somit nicht zu erwarten.

In für den Fachmann umso mehr überraschender Form wurde nun gefunden, daß Zusätze von erfindungsgemäßen Polyolen und Alkylencarbonat zu Polyisocyanat-Bindemittel oder Mischungen aus Polyisocyanaten mit anderen Bindemitteln in Mengen von 10-250 Gew.-Tlen. bezogen auf 100 Gew.-Tle. Bindemittel, vorzugsweise 20-80 Gew.-Tle. Kaltklebrigkeit derartig beleimter Rohmaterialien unter Beibehaltung der guten Rieselfähigkeit bewirken. Der Zusatz von Polyol und Alkylencarbonat erfolgt im Verhältnis von 0,5 : 1,0 bis 10,0 : 1,0 Gew.-Tle., vorzugsweise 1,0 : 1,0 bis 3,0 : 1,0 Gew.-Tle. Die Lagerung der erfindungsgemäß beleimten Rohmaterialien wird unter Erhalt der Kaltklebrigkeit im Vergleich zu nur mit Polyisocyanat beleimten Rohmaterialien nicht beeinträchtigt.

Darüber hinaus ist es bei Zusatz der erfindungsgemäßen Polyole und Alkylencarbonate möglich, die Preßzeiten der Preßwerkstoffe in der Heißpresse unter Beibehaltung der physikalischen und mechanischen Eigenschaften der Fertigplatten je nach Preßtemperatur z.T. erheblich zu reduzieren.

Als Alkylencarbonate kommen flüssige cyclische Alkylencarbonate (cyclische Alkylenester von Carbonsäuren) in Frage, vorzugsweise Propylencarbonat und/oder Butylencarbonat.

Erfindungsgemäß werden als Polyisocyanate eingesetzt:

1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136 beschrieben werden, beispielsweise solche der Formel

$Q(NCO)_n$,

in der

n = 2-4, vorzugsweise 2,

und

Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen,

bedeuten, z.B. 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,5-Hexahydrotoluylendiisocyanat sowie beliebige Gemische dieser Isomeren, Hexahydro-1,3- und/oder 1,4-phenylendiisocyanat, Perhydro-2,4'- und/oder 1,4-Phenylendiisocyanat, 2,4- und 2,6-Toluylendiisocyanat sowie beliebige Gemische dieser Isomeren, Diphenylmethan-2,4' und/oder -4,4'-diisocyanat, Naphthylen-1,5-diisocyanat.

Ferner kommen beispielsweise erfindungsgemäß in Frage:
Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in der DE-Patentschriften 1 022 789, 1 222 067 und 1 027 394 sowie in der DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrfit 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, Estergruppen aufweisende Polyisocyanate, wie sie z.B. in den GB-Patentschriften 965 474 und 1 072 956, in der US-Patentschrift 3 567 763 und in DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden. Aromatische Polyisocyanate sind bevorzugt.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyauratgruppen, Harnstoffgruppen oder Biuretgruppen aufweisenden Polyisocyanate ("modifizierte Polyisocyanate"), insbesondere solche modifizierte Polyisocyanate, die sich vom 2,4- und/oder 2,6-Toluylendiisocyanate bzw. vom 4,4'- und/oder 2,4'-Diphenylmethandiisocyanat ableiten.

Die Verbindungen mit mindestens zwei gegenüber Isocyanaten reaktionsfähigen Wasserstoffatomen von einem Molekulargewicht in der Regel von 400 bis 10.000 sind vorzugsweise Hydroxylgruppen aufweisende Verbindungen, insbesondere zwei bis acht Hydroxylgruppen aufweisende Verbindungen, speziell solche vom Molekulargewicht 1000 bis 8000, vorzugsweise 1500 bis 4000, vorzugsweise mindestens zwei, in der Regel 2 bis 8, vorzugsweise aber 2 bis 4, Hydroxylgruppen aufweisende Polyester und Polyether, wie sie fürdie Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls z.B. durch Halogenatome, substituiert und/oder ungesättigt sein.

Als Beispiele für solche Carbonsäuren und deren Derivate seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren wie Ölsäure, Terephthalsäuredimethylester und Terephthalsäure-bis-glykolester.

Als mehrwertige Alkohole kommen z.B. Ethylenglykol, Propandiol-(1,2) und -(1,3), Butandiol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, 1,4,3,6-Dianhydrosorbit, Methylglykosid, ferner Diethylenglykol, Triethylenglykol, Tetraethylenglykol und höhere Polyethylenglykole, Dipropylenglykol und höhere Polypropylenglykol sowie Dibutylenglykol und höhere Polybutylenglykole in Frage. Die Polyester können anteilig endständi-

4

ge Carboxylgruppe aufweisen. Auch Polyester aus Lactonen, z.B. $\epsilon$-Caprolacton, oder aus Hydroxycarbonsäuren, z.B. $\omega$-Hydroxycapronsäure sind einsetzbar.

Auch in Frage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Styroloxid oder Epichlorhydrin oder von Tetrahydrofuran, mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propandiol-(1,3) oder -(1,2), Trimethylolpropan, Glycerin, Sorbit, 4,4'-Dihydroxy-diphenylpropan, Anilin, Ethanolamin oder Ethylendiamin, hergestellt. Auch Sucrosepolyester, wie sie z.B. in den DE-B 11 76 358 und 10 64 938 beschrieben werden, sowie auf Formit oder Formose gestartete Polyether (DE-A 26 39 083), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet. Mischungen der Polyester und Polyether können selbstverständlich eingesetzt werden.

Gegebenenfalls werden auch Verbindungen mit mindestens zwei gegenüber Isocyanaten reaktionsfähigen Wasserstoffatomen und einem Molekulargewicht von 32 bis 399 mitverwendet.

Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 399 verwendet werden.

Beispiele für derartige Verbindungen werden z.B. in der DE-OS 34 30 285 auf den Seiten 19-23 ausführlich beschrieben.

Gegebenenfalls werden als Hilfsmittel mitverwendet:

a) Katalysatoren der an sich bekannten Art, z.B. tertiäre Amine, wie Triethylamin, Tributylamin, N-Methylmorpholin, N-Ethyl-morpholin, N,N,N',N'-Tetramethyl-ethylendiamin, Pentamethyl-diethylentriamin und höhere Homologe (DE-OS 26 24 527 und 26 24 528), 1,4-Diazabicyclo-(2,2,2)-octan, N-Methyl-N'-dimethylaminoethylpiperazin, Bis-(dimethylaminoalkyl)-piperazine, (DE-OS 26 36 787), N,N-Dimethylbenzylamin, N,N-Dimethylcyclohexylamin, N,N-Diethylbenzylamin, Bis-(N,N-diethylaminoethyl)-adipat, N,N,N',N'-Tetramethyl-1,3-butandiamin, N,N-Dimethyl-$\beta$-phenylethylamin, 1,2-Dimethylimidazol, 2-Methylimidazol, monocyclische und bicyclische Amidine (DE-OS 17 20 633), Bis-(dialkylamino)alkylether (US-PS 33 30 782, DE-AS 0 30 558, DE-OS 18 04 361 und 26 18 280) sowie Amidgruppen (vorzugsweise Formamidgruppen) aufweisende tertiäre Amine gemäß den DE-OS 25 23 633 und 27 32 292). Als Kaltalysatoren kommen auch an sich bekannte Mannichbasen aus sekundären Aminen, wie Dimethylamin, und Aldehyden, vorzugsweise Formaldehyd, oder Ketonen wie Aceton, und Phenolen in Frage.

Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-Diethanolamin, N,N-Dimethylethanolamin, deren Umsetzungsprodukte mit Alkylenoxiden wie Propylenoxid und/oder Ethylenoxid sowie sekundärtertiäre Amine gemäß DE-OS 27 32 292.

Als Katalysatoren kommen ferner Silaamine mit Kohlenstoff-Silizium-Bindungen, wie z.B. in DE-P'S 12 29 290 (entsprechend der US-PS 36 20 984) beschrieben sind, in Frage, z.B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-OS 17 09 043) sowie Amidgruppen (vorzugsweise Formamidgruppen) aufweisende tertiäre Amine gemäß den DE-OS 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, und Phenolen in Frage.

Erfindungsgemäßc können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercapid (DE-AS 17 69 367, US-PS 36 45 927) vorzugsweise Zinn(II)-salze von Carbonsäuren wie Zinn(II)-acetat, Zinn(II)-octoat, Zinn(II)-ethylhexoat und Zinn(II)-laurat und Zinn(IV)-Verbindungen, z.B. Dibutylzinndilaurat in Betracht.

Selbstverständlich können alle obengenannten Katalysatoren als Gemische eingesetzt werden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Menge an Polyisocyanat, eingesetzt.

b) Oberflächenaktive Zusatzstoffe, wie Emulgatoren und Schaumstabilisatoren. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzosulfonsäure oder Dinaphthylmethandisulfonsäure oder von Fettsäuren wie Ricinolsäure oder von polymeren Fettsäuren können als oberflächenaktive Zusatzstoffe mitverwendet werden.

Erfindungsgemäß in Frage kommende Substrate sind lignocellulosehaltige Rohstoffe, welche mit den erfindungsgemäßen Bindemitteln gebunden werden können, wie zum Beispiel Holz, Rinde, Kork, Bagasse, Stroh, Flachs, Bambus, Alfagras, Reisschalen, Sisal- und Kokosfasern. Selbstverständlich können erfindungsgemäß jedoch auch aus anderen organischen (z.B. Kunststoffabfällen aller Art) und/oder anorganischen Rohstoffen (z.B. Blähglimmer oder Silikatkugeln) Preßwerkstoffe hergestellt werden. Das Material kann dabei in Form von Granulaten, Spänen, Fasern, Kugeln oder Mehl vorliegen und einen Feuchtigkeitsgehalt von z.B. 0 bis 35 Gew.-% aufweisen, vorzugsweise von 4 bis 20 Gew.-%.

Es ist erfindungsgemäß möglich, aber weniger bevorzugt, die Komponenten der Bindemittelkombination (Polyisocyanat, Polyether- bzw. Polyesterpolyol und Alkylencarbonat) getrennt auf das zu bindende Material aufzubringen. Bevorzugt ist es, das Polyether- bzw. Polyesterpolyol mit dem Alkylencarbonat in Mischung mit dem Polyisocyanat als Bindemittel einzusetzen.

Erfindungsgemäß wird das zu bindende organische und/oder anorganische Material mit dem Bindemittel in einer Menge von etwa 0,5 bis 20 Gew.-%, bevorzugt 2 bis 12 Gew.-%, bezogen auf Gesamtmasse des Formkörpers, versetzt und - im allgemeinen unter Einwirkung von Druck und Hitze (z.B. 70 bis 250°C und 1 bis 150 bar) - zu Platten oder dreidimensional geformten Formkörpern verpreßt.

In analoger Weise können auch mehrlagige Platten oder Formteile aus Furnieren, Papieren oder Geweben hergestellt werden, indem man die Lagen wie oben beschrieben mit dem Bindemittel behandelt und anschließend - in der Regel bei erhöhter Temperatur und erhöhtem Druck - verpreßt. Vorzugsweise werden Temperaturen von 100 bis 250°C, besonders bevorzugt 130 bis 200°C, eingehalten. Der Anfangspreßdruck liegt vorzugsweise zwischen 5 und 150 bar, im Laufe des Preßvorganges fällt dann der Druck meist bis gegen 0 ab.

Die erfindungsgemäß zu verwendenden Bindemittel können auch mit den in der Holzwerkstoffindustrie bisher überwiegend eingesetzten wäßrigen Lösungen von Kondensationsprodukten aus Formaldehyd mit Harnstoff und/oder Melamin und/oder Phenol kombiniert werden, aber auch mit anderen, bisher weniger üblichen Binde- und Imprägniermitteln, wie z.B. auf Basis von Polyvinylacetat- oder anderen Kunststofflatices, Sulfitablauge oder Tannin, wobei ein Mischungsverhältnis der erfindungsgemäßen mit diesen zusätzlichen Bindemitteln zwischen 1:20 und 20:1, vorzugsweise zwischen 1:5 und 5:1, eingehalten werden kann und wobei man die Polyisocyanatgemische und die zusätzlichen Bindemittel entweder separat oder auch in Mischung einsetzen kann.

Ausführungsbeispiele

In den nachstehenden Beispielen werden folgende Polyole als Ausgangskomponenten eingesetzt:

Polyetherpolyol I, hergestellt aus 1,2-Propandiol und Propylenoxid mit einer OH-Zahl von 284 und einer Viskosität von 75 mPas bei 25°C.

Polyetherpolyol II, hergestellt aus 1,2-Propandiol und Propylenoxid und Ethylenoxid mit einer OH-Zahl von 185 und einer Viskosität von 130 mPas bei 25°C.

Polyetherpolyol III, hergestellt aus Ethylendiamin und Propylenoxid mit einer OH-Zahl von 60 und einer Viskosität von 660 mPas bei 25°C.

Beispiel 1

2800 g Deckschicht-Industriespäne (u = 15,0 Gew.-% a.a.) und 6400 g Mittelschicht (u = 10,0 % a.a.) wurden mit je 5 Gew.-% a.a. eines erfindungsgemäßen Bindemittels, bestehend aus einer Mischung aus 70 Gew.-% rohem Diphenylmethan-4,4'-diisocyanat, NCO-Gehalt 30 Gew.-%, 10 Gew.-% Polyetherpolyol I, 10 Gew.-% Polyetherpolyol II und 10 Gew.-% Propylencarbonat, besprüht. Daraus wurden dreischichtige Plattenformlinge gestreut und in gewissen Zeitabständen sowohl kalt als auch heiß unter Druck verpreßt.

Beispiel 2

Analog Beispiel 1, jedoch besteht das erfindungsgemäße Bindemittel aus 70 Gew.-% rohem Diphenylmethan-4,4'-diisocyanat, NCO-Gehalt 30 Gew.-%, und einer Mischung von 20 Gew.-% Polyetherpolyol III mit 10 Gew.-% Propylencarbonat, wobei die Besprühung der Späne mit dem Isocyanat und der Polyol/Alkylencarbonat-Mischung separat erfolgte. Verpressung analog Beispiel 1.

Beispiel 3

4200 g Deckschicht-Industriespäne (u = 12,0 % a.a.) wurden mit 13 Gew.-% a.a. eines erfindungsgemäßen Bindemittels, bestehend aus einer Mischung aus 80 Gew.-% rohem Diphenylmethan-4,4'-diisocyanat, NCO-Gehalt 30 Gew.-%, 12 Gew.-% Polyetherpolyol II und 8 Gew.-% Propylencarbonat, besprüht. Daraus wurden einschichtige Plattenformlinge gestreut und analog Beispiel 1 verpreßt.

Beispiel 4

Analog Beispiel 3, jedoch besteht eine Hälfte des erfindungsgemäßen Bindemittels aus einer Mischung aus 70 Gew.-% rohem Diphenylmethan-4,4'-diisocyanat, NCO-Gehalt 30 Gew.-%, 20 Gew.-% Polyetherpolyol I und 10 Gew.-% Propylencarbonat und die zweite Hälfte aus einem handelsüblichen E1-Harnstoff-Formaldehydharz. Es wurden je Hälfte 3 Gew.-% a.a. auf die Späne aufgesprüht. Verpressung analog Beispiel 1.

Die gemäß Beispiel 1-4 kalt vorgepreßten Plattenformlinge weisen alle im Vergleich zu nur mit Polyisocyanat behandelten Spänen eine Kaltklebrigkeit der Formlinge auf. Auch bei der Heißverpressung weisen die erfindungsgemäßen Beispiele bei gleichen Versuchsbedingungen deutliche Vorteile gegenüber dem Vergleichsversuch auf.

## Tabelle 1

| Beispiel | Plattenrohdichte kg/m³ | Querzugfestigkeit MPa [1] | |
|---|---|---|---|
| | | V20 | V100 |
| Vergleichsversuch mit 5Gew% a.a. Desmodur® PU 1520 A | 680 | 0,94 | 0,27 |
| 1 | 680 | 1,13 | 0,33 |
| 2 | 680 | 1,09 | 0,34 |
| 3 | 850 | | 0,82 |
| 4 | 650 | 0,84 | |

% a.a. ≙ Gew.-% rechnerisch bezogen auf absolut trockenes Holz

[1] Prüfung nach DIN 68763

7

**Patentansprüche**

1. Verfahren zur Herstellung von Preßwerkstoffen durch Verpressen von Substraten mit Bindemitteln auf Basis von Polyisocyanaten, dadurch gekennzeichnet, daß das Bindemittel als Komponenten Polyisocyanate, Verbindungen mit mindestens zwei gegenüber Isocyanaten reaktionsfähigen Wasserstoffatomen vom Molekulargewicht 400 bis 10.000, Alkylencarbonate und gegebenenfalls weitere Zusatzmittel enthält, wobei auf 100 Gew.-Teile des Polyisocyanats 10-250 Gew.-Teile, vorzugsweise 20-80 Gew.-Teile, der Verbindungen mit mindestens zwei gegenüber Isocyanaten reaktionsfähigen Wasserstoffatomen vom Molekulargewicht 400 bis 10.000 eingesetzt werden, und das Verhältnis dieser Verbindungen zum Alkylencarbonat im Bereich von 0,5:1,0 bis 10,0:1,0 Gew.-Teile liegt.

2. Verfahren nach Anspruch 1, dadurch gekennzeichnet, daß das Alkylencarbonat Propylencarbonat darstellt.

3. Verfahren nach Anspruch 1 und 2, dadurch gekennzeichnet, daß die Verbindungen mit mindestens zwei gegenüber Isocyanaten reaktionsfähigen Wasserstoffatomen Hydroxylgruppen aufweisende Polyether oder Polyester vom Molekulargewicht 400-10.000 darstellen.

4. Verfahren nach Anspruch 3, dadurch gekennzeichnet, daß das Alkylencarbonat als Mischung mit dem Polyether oder Polyester vorliegt.

5. Verfahren nach Anspruch 1-4, dadurch gekennzeichnet, daß das Bindemittel aromatische Polyisocyanate enthält.

6. Verfahren nach Anspruch 1-5, dadurch gekennzeichnet, daß die aromatischen Polyisocyanate Gemische aus Diphenylmethan-diisocyanaten und Polyphenylpolymethylen-polyisocyanaten, wie sie durch Anilin-Formaldehyd-Kondensation und anschließende Phosgenierung erhalten werden, darstellen.

7. Verfahren nach Anspruch 1-6, dadurch gekennzeichnet, daß das Bindemittel als weitere Zusatzmittel wäßrige Kondensationsprodukte aus Harnstoff, Melamin, Phenol und Tannin oder beliebige Mischungen derselben mit Formaldehyd und Sulfitablaugen enthält.

**Claims**

1. Process for the production of pressed materials by compression of substrates with polyisocyanate based binders, characterised in that the binder contains as components polyisocyanates, compounds having at least two hydrogen atoms capable of reacting with isocyanates and a molecular weight of 400 to 10 000, alkene carbonates and optionally other additives, wherein per 100 parts by weight of the polyisocyanate, 10-250 parts by weight, preferably 20-80 parts by weight, of the compounds having at least two hydrogen atoms capable of reacting with isocyanates and a molecular weight of 400 to 10 000 are used and the ratio of these compounds to the alkene carbonate is in the range 0.5:1.0 to 10.0:1.0 parts by weight.

2. Process according to claim 1, characterised in that the alkene carbonate is propylene carbonate.

3. Process according to claims 1 and 2, characterised in that the compounds having at least two hydrogen atoms capable of reacting with isocyanates are polyethers or polyesters of molecular weight 400-10 000 with hydroxyl groups.

4. Process according to claim 3, characterised in that the alkene carbonate is present as a mixture with the polyether or polyester.

5. Process according to claims 1-4, characterised in that the binder contains aromatic polyisocyanates.

6. Process according to claims 1-5, characterised in that the aromatic polyisocyanates are mixtures of diphenylmethane diisocyanates and polyphenylpolymethylene polyisocyanates, as are obtained by aniline-formaldehyde condensation and subsequent phosgenation.

**7.** Process according to claims 1-6, characterised in that the binder contains as further additives aqueous condensation products prepared from urea, melamine, phenol and tannin or any mixtures of these with formaldehyde and spent sulphite liquors.

**Revendications**

**1.** Procédé de fabrication de matériaux comprimés par compression de substrat avec des liants à base de polyisocyanates caractérisé en ce que le liant comprend, comme composants,des polyisocyanates, des composés avec au moins deux atomes d'hydrogène pouvant réagir vis-à-vis des isocyanates et ayant un poids moléculaire de 400 à 10000, des carbonates d'alkylène et éventuellement d'autres additifs, en utilisant, pour 100 parties en poids de polyisocyanates, de 10 à 250 parties en poids et, de préférence, de 20 à 80 parties en poids des composés avec au moins 2 atomes d'hydrogène pouvant réagir vis-à-vis des isocyanates et ayant un poids moléculaire de 400 à 10000, le rapport de ces composés au carbonate d'alkylène étant compris dans la gamme de 0,5:1 à 10:1 exprimé en parties en poids.

**2.** Procédé selon la revendication 1, caractérisé en ce que le carbonate d'alkylène est du carbonate de propylène.

**3.** Procédé selon les revendications 1 et 2, caractérisé en ce que les composés avec au moins deux atomes d'hydrogène pouvant réagir vis-à-vis des polyisocyanates sont des polyéthers ou des polyesters présentant des groupes hydroxyle et ayant un poids moléculaire compris entre 400 et 10000.

**4.** Procédé selon la revendication 3, caractérisé en ce que le carbonate d'alkylène se présente sous forme d'un mélange avec le polyéther ou le polyester.

**5.** Procédé selon les revendications 1 à 4, caractérisé en ce que le liant contient des polyisocyanates aromatiques.

**6.** Procédé selon les revendications 1 à 5, caractérisé en ce que les polyisocyanates aromatiques sont des mélanges de diisocyanate de diphénylméthane et de polyisocyanates de polyphénylpolyméthylène qui sont obtenus par condensation de l'aniline et du formaldéhyde, avec phosgénation ultérieure.

**7.** Procédé selon les revendications 1 à 6, caractérisé en ce que le liant contient, comme autres additifs des produits de condensation aqueux à base d'urée, de mélamine, de phénol et de tanin ou des mélanges quelconques de ceux-ci avec le formaldéhyde et des solutions résiduelles de sulfite.